# EUROPÄISCHE PATENTSCHRIFT

(11) **EP 3 027 826 B1**
(45) Veröffentlichungstag und Bekanntmachung des Hinweises auf die Patenterteilung: **19.07.2017**
(21) Anmeldenummer: 14741895.8
(22) Anmeldetag: 22.07.2014
(51) Int. Cl.: E04G 1/06, E04G 1/14, E04G 7/20, E04G 7/30

(54) **GERÜSTROHR EINES BAUGERÜSTS UND GERÜSTELEMENT**
SCAFFOLDING TUBE AND SCAFFOLD ELEMENT
TUBE D'ÉCHAFAUDAGE ET ÉLÉMENT D'ECHAFAUDAGE

(30) Priorität: 02.08.2013 DE 102013108326
(43) Veröffentlichungstag der Anmeldung: 08.06.2016
(73) Patentinhaber: Peri GmbH, 89264 Weissenhorn (DE)
(72) Erfinder: ERATH, Frank, 89160 Dornstadt (DE); LEDER, Christian, Bibertal/Bühl 89346 (DE); SPECHT, Rudolf, Neu-Ulm 89233 (DE)
(74) Vertreter: Kohler Schmid Möbus Patentanwälte
(86) Internationale Anmeldenummer: PCT/EP2014/065753
(87) Internationale Veröffentlichungsnummer: WO 2015/014676

(56) Entgegenhaltungen:
- WO-A1-02/066768
- CH-A5- 671 814
- DE-A1-102011 001 796
- DE-C- 966 298
- FR-A1- 2 612 999

## Beschreibung

Die Erfindung betrifft ein Gerüstrohr eines Baugerüsts, mit einer Rohrachse, die sich von einem ersten axialen Rohrende zu einem entgegengesetzten zweiten axialen Rohrende erstreckt, einem am ersten axialen Rohrende vorgesehenen Aufnahmeabschnitt und einem am zweiten axialen Rohrende vorgesehenen Einsteckabschnitt, der einen gegenüber dem Aufnahmeabschnitt verringerten Querschnitt hat und mit einem radialen Absatz endet, welcher eine zum Einsteckabschnitt gerichtete, ringförmige Auflagefläche bildet, wobei der Innendurchmesser des Aufnahmeabschnitts größer als der Außendurchmesser des Einsteckabschnitts ist, sodass ein angrenzendes Gerüstrohr mit identischem Einsteckabschnitt in den Aufnahmeabschnitt einsteckbar ist. Darüber hinaus betrifft die Erfindung auch ein Gerüstelement mit einem solchen Gerüstrohr.

Baugerüste werden zum Beispiel als Arbeitsgerüste oder als Traggerüste ausgeführt. Gerüstrohre werden üblicherweise bei Rahmenelementen eines Baugerüsts, insbesondere bei Arbeitsgerüsten, sowie als Einzelstiel beim Bau von Traggerüsten oder bei sogenannten Durchgangsrahmen verwendet. Bei Rahmengerüsten werden zwei parallele Gerüstrohre mit zumindest einem Querträger verbunden, insbesondere verschweißt. Die Rahmenelemente werden dann aufeinander gesteckt, sodass extreme Gerüsthöhen realisiert werden können. Gerüstrohre werden aber auch als einzelne Stangen verbaut. Das Prinzip derartiger Baugerüste ist im Wesentlichen immer gleich. An einem axialen Ende des Gerüstrohrs hat dieses einen verringerten Querschnitt, der den sogenannten Einsteckabschnitt bildet. Am entgegengesetzten Ende, dem Aufnahmeabschnitt, kann dann der Einsteckabschnitt des angrenzenden Gerüstrohrs eingesteckt werden, oder umgekehrt. Der Einsteckabschnitt und der Aufnahmeabschnitt haben radiales Spiel zueinander, um das Einstecken zu erleichtern. Dieses radiale Spiel ist aber nachteilig bezüglich der Standsicherheit des Gerüsts, denn das obere Gerüstrohr kann relativ zum unteren Gerüstrohr leicht kippen. Um den maximalen Kippwinkel zu reduzieren, ist es bekannt, den kompletten Aufnahmeabschnitt mit axialen, durch plastisches Umformen gebildeten Längsnuten zu versehen, die umfangsmäßig voneinander beabstandet sind. Damit wird das radiale Spiel verringert. Dieser Vorteil wird aber mit dem Nachteil erkauft, dass das Ineinanderstecken der Gerüstrohre nicht mehr so einfach möglich ist und sich die Rohre beim Gerüstaufbau und -abbau leichter verhaken bzw. verkanten, insbesondere wenn ein Gerüstrohr eines Rahmenelements deutlich vor dem anderen Gerüstrohr des Rahmenelements eingesteckt wird. DE 966298C offenbart alle technischen Merkmale des Oberbegriffs des Anspruchs 1. Es ist daher Aufgabe der Erfindung, ein Gerüstrohr zu schaffen, das einen einfachen und schnellen Auf- und Abbau eines Baugerüsts bei großer Gerüststabilität ermöglicht.

Diese Aufgabe wird erfindungsgemäß gelöst durch ein Gerüstrohr der eingangs genannten Art, gemäß Anspruch 1. Demgegenüber kann die Stirnfläche des Aufnahmeabschnitts relativ zur Auflagefläche des radialen Absatzes im Stand der Technik so verschoben werden, dass sich die Kontaktfläche verringert, wodurch die Rohre stirnseitig stärker belastet werden, demzufolge eine geringere Tragkraft aufweisen und leichter plastisch deformierbar sind.

Verfahrenstechnisch erfolgt die Verdickung der Rohrwand am ersten axialen Rohrende vorzugsweise durch eine Aufstauchung des Gerüstrohrs, welche zu einer plastischen Aufweitung der Rohrwand in radialer Richtung führt.

Vorzugsweise gilt für die maximale Wandstärke sₘₐₓ am ersten axialen Rohrende: 1,2*s ≤ sₘₐₓ ≤ 2*s, insbesondere sₘₐₓ ≈ 1,5*s, wobei mit s die im Wesentlichen konstante Wandstärke des Gerüstrohrs außerhalb der Rohrwandverdickung am ersten axialen Rohrende bezeichnet wird.

Besonders bevorzugt entspricht ein Außendurchmesser des Gerüstrohrs am ersten axialen Ende im Wesentlichen dem Außendurchmesser des Aufnahmeabschnitts. Dies bedeutet mit anderen Worten, dass sich das erste axiale Rohrende radial nach innen aufweitet, während eine radiale Außenseite des Gerüstrohrs im Bereich des ersten axialen Rohrendes im Wesentlichen zylindrisch, insbesondere kreiszylindrisch bleibt. Die verdickte Rohrwand stellt auf diese Weise nicht nur eine große Stirnfläche zur Verfügung, sondern sorgt darüber hinaus auch für einen möglichst vollflächigen Kontakt dieser Stirnfläche mit der Auflagefläche des eingesteckten Gerüstrohrs.

Am ersten axialen Rohrende des Gerüstrohrs ist bevorzugt ein Verdickungsabschnitt vorgesehen, in dem sich die Rohrwand im Wesentlichen keilförmig von der geringeren Wandstärke s auf die maximale Wandstärke sₘₐₓ verdickt.

Der Verdickungsabschnitt kann dabei insbesondere eine axiale Abmessung L_{A} aufweisen, wobei gilt: s < L_{A} < 5*s, insbesondere L_{A} ≈ 2,5*s, wobei mit s wiederum die im Wesentlichen konstante Wandstärke des Gerüstrohrs außerhalb der Rohrwandverdickung am ersten axialen Rohrende bezeichnet wird.

Die oben genannte Aufgabe wird erfindungsgemäß auch gelöst durch ein Gerüstrohr bei dem der Aufnahmeabschnitt am ersten axialen Rohrende genau eine in Umfangsrichtung unterbrochene oder umlaufende Positioniernut aufweist, welche den Innendurchmesser d_{1,i} des Aufnahmeabschnitts verringert und den minimalen Innendurchmesser d_{1,j,min} des Aufnahmeabschnitts definiert.

Die Erfindung schafft einen ausgezeichneten Kompromiss zwischen geringem Radialspiel und einfachem Ineinanderstecken von benachbarten Gerüstrohren. Durch die angeformte Positioniernut weist der Aufnahmeabschnitt am ersten axialen Rohrende einen minimalen Innendurchmesser auf, der das radiale Spiel gegenüber herkömmlichen, unverformten Gerüstrohren deutlich verringert. Der Aufnahmeabschnitt weist jedoch axial nach der Positioniernut zum radialen Absatz hin wieder einen gegenüber dem minimalen Innendurchmesser vergrößerten Innendurchmesser auf, sodass das einzusteckende Gerüstrohr, nachdem die Spitze des Einsteckabschnitts gerade den Bereich der Positioniernut verlassen hat, noch recht stark gekippt werden kann. Da die ineinanderzusteckenden Gerüstrohre zu Beginn des Einsteckvorgangs sehr einfach und recht stark zueinander kippbar sind, ist ein unerwünschtes Verklemmen oder Verkanten der Gerüstrohre weitgehend ausgeschlossen. Je tiefer jedoch die Spitze des Einsteckabschnitts, das heißt das zweite axiale Rohrende, in den Aufnahmeabschnitt eindringt, umso größer ist auch der Abstand zwischen den beiden entstehenden Anlageflächen, nämlich einerseits der Anlagefläche zwischen der Spitze des Einsteckabschnitts und der Innenseite des Aufnahmeabschnitts sowie andererseits der Anlagefläche zwischen der Positioniernut und dem angrenzenden Bereich des Einsteckabschnitts. Mit zunehmendem axialen Abstand zwischen den Anlageflächen wird der durch das radiale Spiel an der Spitze des Einsteckabschnitts ermöglichte maximale Kippwinkel immer kleiner.

Da die radiale Positionierung des eingesteckten Gerüstrohrs lediglich durch eine einzige Positioniernut erfolgt, lässt sich das Radialspiel, das heißt ein Spalt zwischen dem Außendurchmesser des Einsteckabschnitts und dem durch die Positioniernut definierten, minimalen Innendurchmesser des Aufnahmeabschnitts, gegenüber herkömmlichen Baugerüsten verringern, ohne dass der Aufwand für die Montage oder Demontage des Baugerüsts signifikant ansteigt. Die genau eine Positioniernut ermöglicht nämlich zunächst ein recht starkes Verkippen beim Ineinanderstecken zweier Gerüstrohre, sodass ein montagefreundlicher Auf- und Abbau des Baugerüsts auch bei geringem Radialspiel gewährleistet ist. Im montierten Zustand der Gerüstrohre wirkt sich das geringe Radialspiel dann vorteilhaft auf die Stabilität und Tragfähigkeit des Baugerüsts aus.

In einer Ausführungsform des Gerüstrohrs weist der Einsteckabschnitt vom zweiten axialen Rohrende bis zum radialen Absatz eine axiale Einstecklänge auf, wobei ein axialer Abstand der Positioniernut vom ersten axialen Rohrende kleiner als ein Drittel, insbesondere kleiner als ein Fünftel der axialen Einstecklänge ist.

Ferner kann der axiale Abstand der Positioniernut vom ersten axialen Rohrende auch kleiner als der Innendurchmesser des Aufnahmeabschnitts sein. Infolge der axialen Anordnung der Positioniernut sehr nahe am ersten axialen Rohrende ist zu Beginn des Einsteckvorgangs ein Verkippen der Gerüstrohre zur einfachen Montage bzw. Demontage gut möglich. Zugleich werden die Gerüstrohre im zusammengesteckten Zustand durch die Nähe der Positioniernut zum ersten axialen Rohrende und damit zur Aufstandsfläche des Gerüstrohrs mit geringem radialen Spiel aneinander fixiert. Diese spielarme Fixierung nahe der Aufstandsfläche führt zu einer hohen axialen Tragfähigkeit und Stabilität der Gerüstrohr-Verbindung.

In einer weiteren Ausführungsform des Gerüstrohrs weist der Aufnahmeabschnitt eine in Umfangsrichtung unterbrochene oder umlaufende Nut auf, wobei diese Nut zum ersten axialen Rohrende einen größeren axialen Abstand aufweist als die Positioniernut und einen Innendurchmesser d_{1,i,N} definiert, für den gilt: d_{1,i,min} < d_{1,i,N} < d_{1,i}. Durch diese zusätzlich zur Positioniernut vorgesehene Nut wird zum Ende des Einsteckvorgangs zweier Gerüstrohre, konkret dann, wenn die Spitze des Einsteckabschnitts des einen Gerüstrohrs die Nut im Aufnahmeabschnitt des anderen Gerüstrohrs erreicht, ein möglicher Kippwinkel der beiden Gerüstrohre relativ zueinander reduziert. Dies erhöht die Stabilität und Tragfähigkeit des montierten Baugerüsts, wirkt sich jedoch auf die Montagefreundlichkeit beim Auf- oder Abbau des Baugerüsts kaum aus, da die Kippwinkelreduktion erst zum Ende des Einsteckvorgangs sowie im eingesteckten Zustand zum Tragen kommt. Hervorzuheben ist, dass der Einsteckabschnitt des eingesteckten Gerüstrohrs im Bereich der Positioniernut ein geringeres Radialspiel aufweist als an der optionalen, zusätzlich vorgesehenen Nut.

Der Einsteckabschnitt des Gerüstrohrs weist hierbei vom zweiten axialen Rohrende bis zum radialen Absatz eine axiale Einstecklänge L_{E} auf, wobei für einen axialen Abstand x_{N} der Nut vom ersten axialen Rohrende vorzugsweise gilt: 0,5*L_{E} < x_{N} < L_{E}, insbesondere x_{N} ≈ 0,8*L_{E}. Dadurch erfolgt die Kippwinkelreduktion erst zum Ende des Einsteckvorgangs, sodass der montagefreundliche Aufbau des Baugerüsts kaum beeinflusst wird. Im Übrigen ist ein möglichst großer axialer Abstand zwischen der Positioniernut und der zusätzlichen Nut hinsichtlich einer möglichst großen Kippwinkelreduktion besonders vorteilhaft.

In einer weiteren Ausführungsform weist das Gerüstrohr zwischen dem Aufnahmeabschnitt und dem Einsteckabschnitt einen Zwischenbereich auf, in dem das Gerüstrohr vorzugsweise denselben Außendurchmesser d_{1,a} sowie dieselbe Form wie im Aufnahmeabschnitt hat. Dieser Zwischenbereich dient der Längenausbildung des Gerüstrohrs. Während der Aufnahmeabschnitt die gleiche axiale Länge wie der Einsteckabschnitt aufweist, kann über den Zwischenbereich die geforderte axiale Länge des Gerüstrohrs erreicht werden.

Der Zwischenbereich kann angrenzend an den radialen Absatz insbesondere einen Aufweitungsabschnitt aufweisen, in dem sich das Gerüstrohr zum radialen Absatz hin radial aufweitet. Dadurch entsteht am radialen Absatz des Gerüstrohrs eine vergrößerte Auflagefläche, sodass sichergestellt ist, dass die Stirnfläche am ersten axialen Rohrende des aufgesteckten Gerüstrohrs stets komplett trägt.

Insbesondere kann die ringförmige Auflagefläche des Gerüstrohrs einen Außendurchmesser d_{3,a} aufweisen, der größer ist als der Außendurchmesser d_{1,a} des Aufnahmeabschnitts.

In einer weiteren Ausführungsform des Gerüstrohrs weist der Einsteckabschnitt angrenzend an den radialen Absatz einen in Umfangsrichtung umlaufenden Einzug auf, sodass die ringförmige Auflagefläche einen Innendurchmesser d_{3,i} aufweist, der kleiner ist als der Außendurchmesser d_{2,a} des Einsteckabschnitts.

Vorzugsweise verjüngt sich der Einsteckabschnitt zum zweiten axialen Ende des Gerüstrohrs hin und bildet einen Einführkonus. Dieser Einführkonus wird beispielsweise durch plastische Rohrverformung erzeugt und erleichtert das Einstecken des Einsteckabschnitts in den Aufnahmeabschnitt eines weiteren Gerüstrohrs, da der einzufädelnde Bereich des Einsteckabschnitts, nämlich das zweite axiale Rohrende, eine Art Spitze bildet.

Die Wandstärke des Gerüstrohrs beträgt bei einem Arbeitsgerüst bevorzugt maximal 3,2 mm, insbesondere etwa 2,7 mm. Dies stellt eine besonders geringe Wandstärke für ein Gerüstrohr dar, was sich entsprechend vorteilhaft auf dessen Gewicht auswirkt. Die geringe Wandstärke lässt sich realisieren, weil die Stabilität des Gerüstrohrs bzw. des Baugerüsts über die Positioniernut und/oder die verdickte Rohrwand am ersten axialen Rohrende des Gerüstrohrs sichergestellt ist. Aufgrund der geringeren Wandstärke des Gerüstrohrs wird Gewicht eingespart, was wiederum den Auf- und Abbau des Baugerüsts erleichtert. Dasselbe gilt auch für Traggerüste, die derzeit übliche Wandstärken von wenigstens 3,2 mm haben. Diese Wandstärke kann insbesondere auf etwa 2,9 mm reduziert werden oder alternativ unverändert bleiben, wodurch sich die Tragkraft des Gerüsts deutlich erhöht.

Die Erfindung umfasst ferner ein Gerüstelement, das wenigstens ein oben genanntes Gerüstrohr und einen am Gerüstrohr fest angebrachten Querträger umfasst, wobei der Querträger vorzugsweise senkrecht zum Gerüstrohr am Aufnahmeabschnitt oder an einem Zwischenbereich des Gerüstrohrs angeordnet und befestigt ist. Der zumindest eine lasttragende Querträger ist vorzugsweise am Aufnahmeabschnitt oder am Zwischenbereich angeordnet, da dies der stabilisierende Bereich des erfindungsgemäßen Gerüstrohrs ist. Bei einem derartigen Gerüstelement kann es sich beispielsweise um ein Winkelelement handeln, das beim Gerüstbau zur Verbreiterung der Arbeitsfläche verwendet wird, oder um ein Rahmenelement.

Insbesondere kann das Gerüstelement zwei der oben genannten Gerüstrohre umfassen, welche über den wenigstens einen Querträger miteinander verbunden sind, um ein Rahmenelement des Baugerüsts zu bilden. Ein derartig ausgebildetes Rahmenelement ist typischerweise als H-Element oder T-Element bekannt und wird beim Gerüstbau verwendet, um die Seitenwände des Baugerüsts in einer schnellen und effizienten Weise zu bilden.

Weitere Merkmale und Vorteile der Erfindung ergeben sich aus der nachfolgenden Beschreibung bevorzugter Ausführungsformen und der Bezugnahme auf die Zeichnungen. In diesen zeigen:
- Figur 1 einen Längsschnitt durch zwei ineinandergesteckte erfindungsgemäße Gerüstrohre gemäß einer ersten Ausführungsform;
- Figur 2 einen Detailausschnitt der Figur 1 im Bereich eines ersten axialen Rohrendes;
- Figur 3 einen Längsschnitt durch zwei ineinandergesteckte erfindungsgemäße Gerüstrohre gemäß einer zweiten Ausführungsform;
- Figur 4 einen Detailausschnitt der Figur 3 im Bereich eines ersten axialen Rohrendes;
- Figur 5 eine perspektivische Ansicht eines erfindungsgemäßen Gerüstelements mit zwei erfindungsgemäßen Gerüstrohren; und
- Figur 6 eine perspektivische Ansicht eines erfindungsgemäßen Gerüstrohrs, hier für ein Modulgerüst.

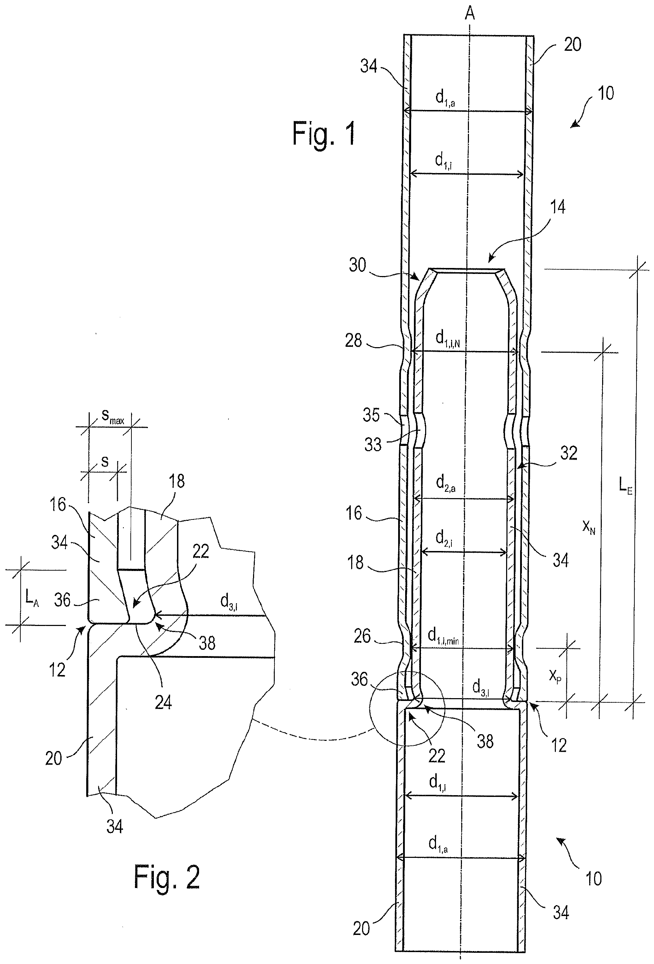

Die Figuren 1 bis 4 zeigen Gerüstrohre 10 für ein Baugerüst, welche als Stangen oder Teile eines Gerüstelements, beispielsweise eines später noch gezeigten Rahmenelements, ausgebildet sein können. Jedes Gerüstrohr 10 umfasst eine Rohrachse A, die sich von einem ersten axialen Rohrende 12 zu einem entgegengesetzten zweiten axialen Rohrende 14 erstreckt, einem am ersten axialen Rohrende 12 vorgesehenen Aufnahmeabschnitt 16 und einem am zweiten axialen Rohrende 14 vorgesehenen Einsteckabschnitt 18, der einen geringeren Außenquerschnitt als die übrigen Abschnitte des Gerüstrohres 10 hat.

Ein Innendurchmesser d_{1,i} des Aufnahmeabschnitts 16 ist größer als ein Außendurchmesser d_{2,a} des Einsteckabschnitts 18, sodass ein angrenzendes Gerüstrohr 10 mit identischem Einsteckabschnitt 18 in den Aufnahmeabschnitt 16 einsteckbar ist.

Ein Zwischenbereich 20 verbindet den Aufnahmeabschnitt 16 mit dem Einsteckabschnitt 18, wobei der Zwischenbereich 20 vorzugsweise absatzlos mit derselben Geometrie und denselben Abmaßen in den Aufnahmeabschnitt 16 übergeht.

Der Zwischenbereich 20 ist über einen radialen Absatz 22 mit dem Einsteckabschnitt 18 einstückig verbunden. Der radiale Absatz 22 weist eine zum Einsteckabschnitt 18 gerichtete Auflagefläche 24 auf, die beim Ineinanderstecken zweier Gerüstrohre 10 als Anschlag dient.

Das gesamte Gerüstrohr 10 ist einstückig aus einem Metallrohr hergestellt, und die verschiedenen Abschnitte werden lediglich durch plastische Verformung des Gerüstrohrs 10 gebildet.

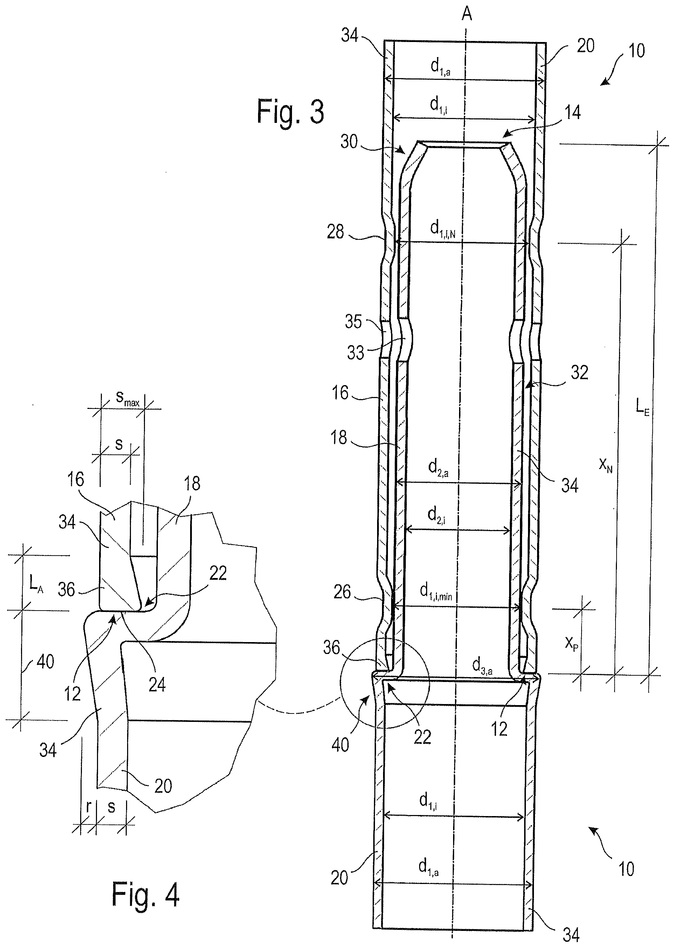

Gemäß den Figuren 1 und 3 weist der Aufnahmeabschnitt 16 am ersten axialen Rohrende 12 genau eine in Umfangsrichtung unterbrochene oder umlaufende Positioniernut 26 auf, welche den Innendurchmesser d_{1,i} des Aufnahmeabschnitts 16 verringert. Ein minimaler Innendurchmesser d_{1,i,min} des Aufnahmeabschnitts 16 wird dabei ausschließlich durch die genau eine Positioniernut 26 definiert.

Dieser durch die Positioniernut 26 definierte, minimale Innendurchmesser d_{1,i,min} des Aufnahmeabschnitts 16 ist nur geringfügig größer als der Außendurchmesser d_{2,a} des Einsteckabschnitts 18, sodass zwei zusammengesteckte Gerüstrohre 10 im Bereich der Positioniernut 26 in radialer Richtung nahezu spielfrei verbunden sind. Diese Verbindung der ineinandergesteckten Gerüstrohre 10 mit geringem radialen Spiel führt zu einer hohen Stabilität und Tragfähigkeit des Baugerüsts.

Da der Aufnahmeabschnitt 16 lediglich eine einzige Positioniernut 26 aufweist, die den minimalen Innendurchmesser d_{1,i,min} definiert, ist zu Beginn des Einsteckvorgangs zweier Gerüstrohre 10 noch ein recht starkes Verkippen der Gerüstrohre 10 möglich, sodass sich trotz des geringen radialen Spiels im Bereich der Positioniernut 26 eine einfache Montage und Demontage des Baugerüsts ergibt.

Um zu Beginn des Einsteckvorgangs zweier Gerüstrohre 10 einen besonders großen Kippwinkel zu ermöglichen und die ineinandergesteckten Gerüstrohre 10 im Bereich des ersten axialen Rohrendes 12 radial möglichst spielfrei aneinander zu fixieren, ist es vorteilhaft, wenn die Positioniernut 26 möglichst nah am ersten axialen Rohrende 12 angeordnet ist. Allerdings ist die Positioniernut 26 vom ersten axialen Rohrende 12 soweit beabstandet, dass der radiale Außendurchmesser d_{1,a} des Aufnahmeabschnitts 16 nicht mehr durch die Positioniernut 26 verringert ist. Der Durchmesser einer die Aufstandsfläche bildenden, ringförmigen Stirnfläche am ersten axialen Rohrende 12 wird folglich durch die Positioniernut 26 nicht reduziert, was sich positiv auf die Stabilität und Tragfähigkeit des Baugerüsts auswirkt.

Der Einsteckabschnitt 18 weist vom zweiten axialen Rohrende 14 bis zum radialen Absatz 22 eine axiale Einstecklänge L_{E} auf, wobei es sich als besonders vorteilhaft erwiesen hat, wenn ein axialer Abstand x_{P} der Positioniernut 26 vom ersten axialen Rohrende 12 kleiner als ein Drittel, insbesondere kleiner als ein Fünftel der axialen Einstecklänge L_{E} ist. Dabei liegt die Einstecklänge L_{E} vorzugsweise in einem Bereich von etwa 150 mm bis 250 mm.

In Bezug auf den Innendurchmesser d_{1,i} des Aufnahmeabschnitts 16 hat es sich als besonders vorteilhaft erwiesen, wenn der axiale Abstand x_{P} der Positioniernut 26 vom ersten axialen Rohrende 12 kleiner als der Innendurchmesser d_{1,i} des Aufnahmeabschnitts 16 ist.

Wie in den Figuren 1 und 3 dargestellt, weist der Aufnahmeabschnitt 16 eine weitere, in Umfangsrichtung unterbrochene oder umlaufende Nut 28 auf, wobei diese Nut 28 zum ersten axialen Rohrende 12 einen größeren axialen Abstand x_{N} aufweist, als die Positioniernut 26 und darüber hinaus einen Innendurchmesser d_{1,i,N} definiert, für den gilt: d_{1,i,min} < d_{1,i,N} < d_{1,i}. Dies bedeutet mit anderen Worten, dass die optionale Nut 28 ein größeres radiales Spiel zum Einsteckabschnitt 18 eines eingesteckten Gerüstrohrs 10 aufweist, als die Positioniernut 26. Die Nut 28 dient lediglich dazu, den Kippwinkel am Ende des Einsteckvorgangs sowie im zusammengesteckten Zustand zweier Gerüstrohre 10 zu reduzieren, was sich vorteilhaft auf die Stabilität und Tragfähigkeit des Baugerüsts, jedoch kaum nachteilig auf dessen Montagekomfort auswirkt.

Eine besonders große Kippwinkelreduktion lässt sich realisieren, wenn die Nut 28 in axialer Richtung möglichst weit entfernt von der Positioniernut 26 angeordnet ist. In Bezug auf die axiale Einstecklänge L_{E} des Einsteckabschnitts 18 hat es sich als besonders vorteilhaft herausgestellt, wenn für einen axialen Abstand x_{N} der Nut 28 vom ersten axialen Rohrende 12 gilt: 0,5*L_{E} < x_{N} < L_{E}, insbesondere x_{N} ≈ 0,8*L_{E}.

Der Einsteckabschnitt 18 weist ein sich verjüngendes, freies Ende auf. Der Querschnitt des Einsteckabschnitts 18 ist soweit verringert, dass der Außendurchmesser d_{2,a} des Einsteckabschnitts 18 kleiner als der Innendurchmessers d_{1,i,min} des Aufnahmeabschnitts 16 im Bereich der Positioniernut 26 ist. Damit ist gewährleistet, dass der Einsteckabschnitt 18 eines ersten Gerüstrohrs 10 in den Aufnahmeabschnitt 16 eines identischen zweiten Gerüstrohrs 10 einsteckbar ist.

Gemäß den Figuren 1 und 3 verjüngt sich der Einsteckabschnitt 18 des Gerüstrohrs 10 zum zweiten axialen Rohrende 14 hin und bildet einen Einführkonus 30. An den Einführkonus 30 schließt sich axial ein Einführzylinder 32 mit weitgehend konstantem, kreiszylindrischem Querschnitt an.

In Ausführungsvarianten des Gerüstrohrs 10 mit einem solchen Einführkonus 30 ist darauf zu achten, dass die optionale Nut 28 im zusammengesteckten Zustand zweier Gerüstrohre 10 radial an den Einführzylinder 32 und nicht an den Einführkonus 30 angrenzt, da sich ansonsten keine Kippwinkelreduktion durch die Nut 28 einstellt.

Ferner weist das Gerüstrohr 10 am Einsteckabschnitt 18 eine Öffnung 33 auf (siehe Figuren 1 und 3), die für einen Sicherungsstift vorgesehen ist, welcher nach dem Zusammenstecken zweier Gerüstrohre 10 die Verbindung zusätzlich sichert. Der Aufnahmeabschnitt 16 weist eine entsprechende Öffnung 35 auf, die mit der Öffnung 33 fluchtet, sodass der Sicherungsstift durch die beiden Öffnungen 33, 35 gesteckt werden kann.

Insbesondere anhand der Schnittdetails in den Figuren 2 und 4 ist gut zu erkennen, dass eine Rohrwand 34 des Gerüstrohrs 10 am ersten axialen Rohrende 12 eine maximale Wandstärke sₘₐₓ und im Übrigen eine im Wesentlichen konstante, geringere Wandstärke s aufweist.

In den dargestellten Ausführungsbeispielen wurde die Verdickung der Rohrwand 34 am ersten axialen Rohrende 12 durch eine Aufstauchung des Gerüstrohrs 10 radial nach innen erreicht, sodass ein Außendurchmesser d_{1,a} des Gerüstrohrs 10 am ersten axialen Rohrende 12 im Wesentlichen dem Außendurchmesser d_{1,a} des Aufnahmeabschnitts 16 entspricht. Mit Ausnahme der Positioniernut 26 und der optional vorgesehenen Nut 28 behält der Aufnahmeabschnitt 16 also folglich einen konstanten, im Wesentlichen kreiszylindrischen Außenquerschnitt bei.

Gemäß den Figuren 2 und 4 weist das Gerüstrohr 10 am ersten axialen Rohrende 12 einen Verdickungsabschnitt 36 auf, in welchem sich die Rohrwand 34 im Wesentlichen keilförmig von der geringeren Wandstärke s auf die maximale Wandstärke sₘₐₓ verdickt, wobei für eine axiale Abmessung L_{A} des Verdickungsabschnitts 36 gilt: s < L_{A} <5*s, insbesondere L_{A} ≈ 2*s, wobei s die (mit Ausnahme des Verdickungsabschnitts 36) weitgehend konstante Wandstärke des Gerüstrohrs 10 bezeichnet.

In Bezug auf diese Wandstärke s des Gerüstrohrs 10 gilt für die maximale Wandstärke sₘₐₓ am ersten axialen Rohrende 12: 1,2*s ≤ sₘₐₓ≤ 2*s, insbesondere sₘₐₓ ≈ 1,5*s.

Die Figuren 1 und 2 zeigen Gerüstrohre 10 gemäß einer ersten Ausführungsform, bei welcher der Einsteckabschnitt 18 angrenzend an den radialen Absatz 22 einen in Umfangsrichtung umlaufenden Einzug 38 aufweist, sodass die ringförmige Auflagefläche 24 einen Innendurchmesser d_{3,i} aufweist, der kleiner ist als der Außendurchmesser d_{2,a} des Einsteckabschnitts 18.

Demgegenüber zeigen die Figuren 3 und 4 Gerüstrohre 10 gemäß einer zweiten Ausführungsform, welche jedoch strukturell und funktional der ersten Ausführungsform sehr ähnlich ist, sodass im Folgenden lediglich auf Unterschiede eingegangen wird.

Abweichend von der ersten Ausführungsform weisen die Gerüstrohre 10 gemäß den Figuren 3 und 4 angrenzend an den radialen Absatz 22 keinen in Umfangsrichtung umlaufenden Einzug 38 auf, sodass der Innendurchmesser d_{3,i} der Auflagefläche 24 etwa dem Außendurchmesser d_{2,a} des Einsteckabschnitts 18 entspricht.

Stattdessen weist die ringförmige Auflagefläche 24 des Gerüstrohrs 10 gemäß den Figuren 3 und 4 im Unterschied zur ersten Ausführungsform einen Außendurchmesser d_{3,a} auf, der größer ist als der Außendurchmesser d_{1,a} des Aufnahmeabschnitts 16.

Dies wird dadurch erreicht, dass der Zwischenbereich 20 des Gerüstrohrs 10 angrenzend an den radialen Absatz 22 einen konischen Aufweitungsabschnitt 40 aufweist, in dem sich das Gerüstrohr 10 zum radialen Absatz 22 hin radial aufweitet.

In Bezug auf die Wandstärke s gilt für eine Aufweitung r des Aufweitungsabschnitts 40: 0,2*s ≤ r ≤ s, insbesondere r ≈ 0,5*s. Durch die radiale Aufweitung r des Zwischenbereichs 20 ist sichergestellt, dass bei zusammengesteckten Gerüstrohren 10 eine gegebenenfalls verbreiterte Stirnfläche des ersten axialen Rohrendes 12 immer vollflächig an der Auflagefläche 24 anliegt. Übermäßige Flächenpressungen sowie ungleichmäßige Druckverteilungen werden dadurch weitgehend vermieden.

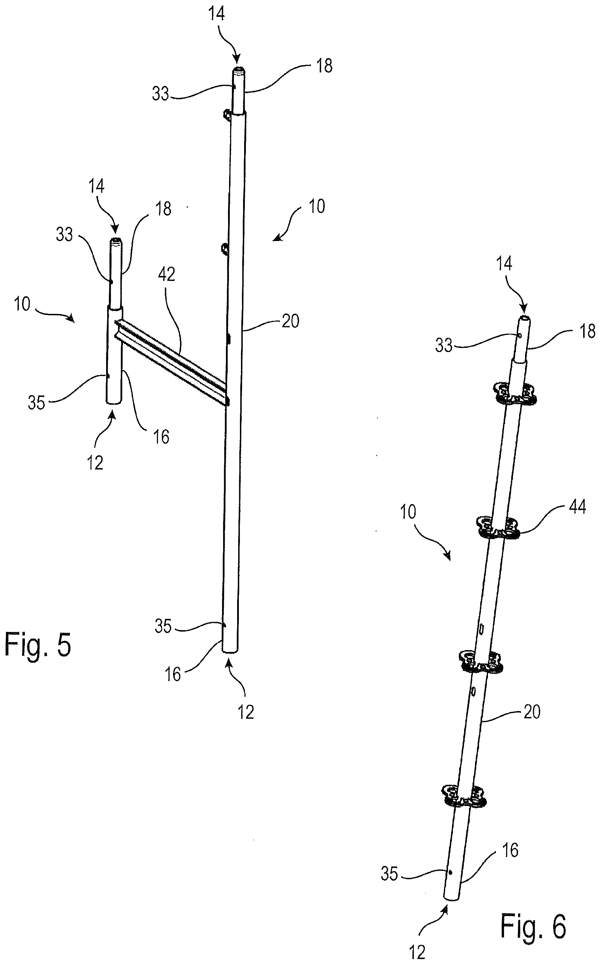

Gerüstrohre 10 gemäß den Figuren 1 bis 4 können auch bei Gerüstelementen vorgesehen sein. Bei diesen Gerüstelementen handelt es sich beispielsweise um Rahmenelemente (siehe Figur 5) oder Winkelelemente, die zusätzlich zu dem Gerüstrohr 10 einen Querträger 42 oder einen andersartig gestalteten Träger aufweisen. Diese Träger sind an das oder die Gerüstrohre 10 geschweißt, insbesondere an deren Aufnahmeabschnitt 16 oder Zwischenbereich 20.

Im Ausführungsbeispiel gemäß Figur 5 sind zwei unterschiedlich lange Gerüstrohre 10 über einen jeweils angeschweißten Querträger 42 miteinander unter Bildung eines Gerüstelements verbunden. Beide Gerüstrohre 10 haben in diesem Fall auf derselben Seite liegende Einsteckabschnitte 18 und an ihren entgegengesetzten Enden entsprechende Aufnahmeabschnitte 16. Auf das kürzere Gerüstrohr 10 kann gegebenenfalls ein Zwischenrohr aufgesteckt werden.

Alternativ hierzu kann das Gerüstrohr 10 auch für ein erfindungsgemäßes Winkelelement eingesetzt werden.

Abgesehen vom Verdickungsabschnitt 36 beträgt die Wandstärke s des unverformten Gerüstrohrs 10 für ein Arbeitsgerüst maximal 3,2 mm, insbesondere etwa 2,7 mm, was geringer ist als die Wandstärke herkömmlicher Gerüstrohre. Folglich sind die erfindungsgemäßen Gerüstrohre 10 leichter und weisen dementsprechend Vorteile in der Handhabung auf.

In Figur 5 ist ein Teil eines Arbeitsgerüsts dargestellt, welches neben einem Bauwerk angeordnet ist und von Arbeitern betreten wird.

Alternativ kann das Gerüstrohr 10 auch Teil eines Modulgerüsts sein, wie dies in Figur 6 dargestellt ist. Die Figur 6 zeigt konkret ein Gerüstrohr 10, welches als Tragrohr ausgeführt ist und zum Beispiel eine Deckenschalung trägt. Auch dieses Gerüstrohr 10 ist so ausgeführt, wie dies anhand der Figuren 1 bis 4 zuvor beschrieben und dargestellt wurde. Abgesehen vom Verdickungsabschnitt 36 beträgt die Wandstärke s eines solchen Gerüstrohrs 10 für Traggerüste vorzugsweise, dies ist nicht einschränkend zu verstehen, zwischen 2,7 mm und 3,2 mm und ist damit geringer als die Wandstärke herkömmlicher Rohre für Traggerüste.

Optional vorgesehene, am Gerüstrohr 10 angebrachte Rosetten 44 dienen der Befestigung von angrenzenden Gerüstteilen.

### Bezugszeichenliste

- 10: Gerüstrohre
- 12: Erstes axiales Rohrende
- 14: Zweites axiales Rohrende
- 16: Aufnahmeabschnitt
- 18: Einsteckabschnitt
- 20: Zwischenbereich
- 22: Absatz
- 24: Auflagefläche
- 26: Positioniernut
- 28: Nut
- 30: Einführkonus
- 32: Einführzylinder
- 33: Öffnung
- 34: Rohrwand
- 35: Öffnung
- 36: Aufweitungsabschnitt
- 38: Einzug
- 40: Aufweitungsabschnitt
- 42: Querträger
- 44: Rosetten

## Patentansprüche

1. Gerüstrohr eines Baugerüsts, mit
einer Rohrachse (A), die sich von einem ersten axialen Rohrende (12) zu einem entgegengesetzten zweiten axialen Rohrende (14) erstreckt,
einem am ersten axialen Rohrende (12) vorgesehenen Aufnahmeabschnitt (16) und
einem am zweiten axialen Rohrende (14) vorgesehenen Einsteckabschnitt (18), der einen gegenüber dem Aufnahmeabschnitt (16) verringerten Querschnitt hat und mit einem radialen Absatz (22) endet, welcher eine zum Einsteckabschnitt (18) gerichtete, ringförmige Auflagefläche (24) bildet,
wobei der Innendurchmesser (d_{1,i}) des Aufnahmeabschnitts (16) größer als der Außendurchmessers (d_{2,a}) des Einsteckabschnitts (18) ist, sodass ein angrenzendes Gerüstrohr (10) mit identischem Einsteckabschnitt (18) in den Aufnahmeabschnitt (16) einsteckbar ist, wobei eine Rohrwand (34) des Gerüstrohrs (10) am ersten axialen Rohrende (12) eine maximale Wandstärke (sₘₐₓ) und im Übrigen eine geringere Wandstärke (s) aufweist, **dadurch gekennzeichnet, dass** das Gerüstrohr einstückig hergestellt ist.

2. Gerüstrohr nach Anspruch 1, **dadurch gekennzeichnet, dass** für die maximale Wandstärke (sₘₐₓ) am ersten axialen Rohrende (12) gilt: 1,2*s ≤ sₘₐₓ ≤ 2*s, insbesondere sₘₐₓ ≈ 1,5*s.

3. Gerüstrohr nach Anspruch 1 oder 2, **dadurch gekennzeichnet, dass** ein Außendurchmesser (d_{1,a}) des Gerüstrohrs (10) am ersten axialen Rohrende (12) im Wesentlichen einem Außendurchmesser (d_{1,a}) des Aufnahmeabschnitts (16) entspricht.

4. Gerüstrohr nach einem der vorhergehenden Ansprüche, **dadurch gekennzeichnet, dass** das Gerüstrohr (10) am ersten axialen Rohrende (12) einen Verdickungsabschnitt (36) aufweist, in dem sich die Rohrwand (34) im Wesentlichen keilförmig von der geringeren Wandstärke (s) auf die maximale Wandstärke (sₘₐₓ) verdickt.

5. Gerüstrohr nach Anspruch 4, **dadurch gekennzeichnet, dass** der Verdickungsabschnitt (36) eine axiaₗe Abmessung (L_{A}) aufweist, wobei gilt: s < L_{A} < 5*s, insbesondere L_{A} ≈ 2,5*s.

6. Gerüstrohr nach einem der vorhergehenden Ansprüche, **dadurch gekennzeichnet, dass** der Aufnahmeabschnitt (16) am ersten axialen Rohrende (12) genau eine in Umfangsrichtung unterbrochene oder umlaufende Positioniernut (26) aufweist, welche den Innendurchmesser (d_{1;i}) des Aufnahmeabschnitts (16) verringert und den minimalen Innendurchmesser (d_{1,i,min}) des Aufnahmeabschnitts (16) definiert.

7. Gerüstrohr nach Anspruch 6, **dadurch gekennzeichnet, dass** der Einsteckabschnitt (18) vom zweiten axialen Rohrende (14) bis zum radialen Absatz (22) eine axiale Einstecklänge (L_{E}) aufweist, wobei ein axialer Abstand (xp) der Positioniernut (26) vom ersten axialen Rohrende (12) kleiner als ein Drittel, insbesondere kleiner als ein Fünftel der axialen Einstecklänge (L_{E}) ist.

8. Gerüstrohr nach Anspruch 6 oder 7, **dadurch gekennzeichnet, dass** ein axialer Abstand (x_{P}) der Positioniernut (26) vom ersten axialen Rohrende (12) kleiner als der Innendurchmesser (d_{1,i}) des Aufnahmeabschnitts (16) ist.

9. Gerüstrohr nach einem der Ansprüche 6 bis 8, **dadurch gekennzeichnet, dass** der Aufnahmeabschnitt (16) eine in Umfangsrichtung unterbrochene oder umlaufende Nut (28) aufweist, wobei diese Nut (28) zum ersten axialen Rohrende (12) einen größeren axialen Abstand (x_{N}) aufweist als die Positioniernut (26) und einen Innendurchmesser (d_{1,i,N}) definiert, für den gilt: d_{1,i,min} < d_{1,i,N} < d_{1,i}.

10. Gerüstrohr nach Anspruch 9, **dadurch gekennzeichnet, dass** der Einsteckabschnitt (18) vom zweiten axialen Rohrende (14) bis zum radialen Absatz (22) eine axiale Einstecklänge (L_{E}) aufweist, wobei für einen axialen Abstand (x_{N}) der Nut (28) vom ersten axialen Rohrende (12) gilt: 0,5*L_{E} < x_{N} < L_{E}, insbesondere x_{N} ≈ 0,8*L_{E}.

11. Gerüstrohr nach einem der vorhergehenden Ansprüche, **dadurch gekennzeichnet, dass** das Gerüstrohr (10) zwischen dem Aufnahmeabschnitt (16) und dem Einsteckabschnitt (18) einen Zwischenbereich (20) aufweist, in dem das Gerüstrohr (10) vorzugsweise denselben Außendurchmesser (d_{1,a}) wie im Aufnahmeabschnitt (16) hat.

12. Gerüstrohr nach Anspruch 11, **dadurch gekennzeichnet, dass** der Zwischenbereich (20) angrenzend an den radialen Absatz (22) einen Aufweitungsabschnitt (40) aufweist, in dem sich das Gerüstrohr (10) zum radialen Absatz (22) hin radial aufweitet.

13. Gerüstrohr nach einem der vorhergehenden Ansprüche, **dadurch gekennzeichnet, dass** die ringförmige Auflagefläche (24) einen Außendurchmesser (d_{3,a}) aufweist, der größer ist als der Außendurchmesser (d_{1,a}) des Aufnahmeabschnitts (16).

14. Gerüstrohr nach einem der vorhergehenden Ansprüche, **dadurch gekennzeichnet, dass** der Einsteckabschnitt (18) angrenzend an den radialen Absatz (22) einen in Umfangsrichtung umlaufenden Einzug (38) aufweist, sodass die ringförmige Auflagefläche (24) einen Innendurchmesser (d_{3,i}) aufweist, der kleiner ist als der Außendurchmesser (d_{2,a}) des Einsteckabschnitts (18).

15. Gerüstrohr nach einem der vorhergehenden Ansprüche, **dadurch gekennzeichnet, dass** sich der Einsteckabschnitt (18) zum zweiten axialen Rohrende (14) hin verjüngt und einen Einführkonus (30) bildet.

16. Gerüstrohr nach einem der vorhergehenden Ansprüche, **dadurch gekennzeichnet, dass** das Gerüstrohr (10) Teil eines Arbeitsgerüsts ist und die Wandstärke (s) des Gerüstrohres (10) maximal 3,2 mm, insbesondere etwa 2,7 mm, beträgt oder Teil eines Traggerüsts ist und die Wandstärke (s) des Gerüstrohres (10) 2,7 mm bis 3,2 mm beträgt.

17. Gerüstelement mit wenigstens einem Gerüstrohr (10) nach einem der vorhergehenden Ansprüche und einem am Gerüstrohr (10) fest angebrachten Querträger (42), wobei der Querträger (42) vorzugsweise senkrecht zum Gerüstrohr (10) am Aufnahmeabschnitt (16) oder an einem Zwischenbereich (20) des Gerüstrohrs (10) angeordnet ist.

18. Gerüstelement nach Anspruch 17, **dadurch gekennzeichnet, dass** zwei Gerüstrohre (10) nach einem der Ansprüche 1 bis 16 vorgesehen sind, die über den wenigstens einen Querträger (42) miteinander verbunden sind, um ein Rahmenelement des Baugerüsts zu bilden.

## Claims

1. Scaffolding pipe of a structural scaffolding system having:
a pipe axis (A) which extends from a first axial pipe end (12) to an opposing second axial pipe end (14),
a receiving portion (16) which is provided on the first axial pipe end (12) and
an insertion portion (18) which is provided on the second axial pipe end (14) and which has a reduced cross-section compared with the receiving portion (16) and terminates with a radial shoulder (22) which forms an annular support face (24) which is directed towards the insertion portion (18), the inner diameter (d_{1,i}) of the receiving portion (16) being greater than the outer diameter (d_{2,a}) of the insertion portion (18) so that an adjacent scaffolding pipe (10) having an identical insertion portion (18) can be inserted into the receiving portion (16), wherein a pipe wall (34) of the scaffolding pipe (10) has at the first axial pipe end (12) a maximum wall thickness (sₘₐₓ) and otherwise a smaller wall thickness (s) **characterised in that** the scaffolding pipe is produced in one piece.

2. Scaffolding pipe according to claim 1, **characterised in that** the following applies to the maximum wall thickness (sₘₐₓ) at the first axial pipe end (12) : 1.2*s ≤ sₘₐₓ ≤ 2*s, in particular sₘₐₓ ≈ 1.5*s.

3. Scaffolding pipe according to claim 1 or claim 2, **characterised in that** an outer diameter (d_{1,a}) of the scaffolding pipe (10) at the first axial pipe end (12) substantially corresponds to an outer diameter (d_{1,a}) of the receiving portion (16).

4. Scaffolding pipe according to any one of the preceding claims, **characterised in that** the scaffolding pipe (10) has at the first axial pipe end (12) a thickened portion (36) in which the pipe wall (34) is thickened in a substantially wedge-like manner from the smaller wall thickness (s) to the maximum wall thickness (Sₘₐₓ₎.

5. Scaffolding pipe according to claim 4, **characterised in that** the thickened portion (36) has an axial dimension (L_{A}), where: s < L_{A} < 5*s, in particular L_{A} ≈ 2.5*s.

6. Scaffolding pipe according to any one of the preceding claims, **characterised in that** the receiving portion (16) at the first axial pipe end (12) has precisely one positioning groove (26) which is interrupted or continuous in a peripheral direction and which reduces the inner diameter (d_{1,i}) of the receiving portion (16) and defines the minimum inner diameter (d_{1,i,min}) of the receiving portion (16).

7. Scaffolding pipe according to claim 6, **characterised in that** the insertion portion (18) has from the second axial pipe end (14) to the radial shoulder (22) an axial insertion length (L_{E}), an axial spacing (xp) of the positioning groove (26) from the first axial pipe end (12) being smaller than a third, in particular smaller than a fifth, of the axial insertion length (L_{E}).

8. Scaffolding pipe according to claim 6 or claim 7, **characterised in that** an axial spacing (xp) of the positioning groove (26) from the first axial pipe end (12) is smaller than the inner diameter (d_{1,i}) of the receiving portion (16).

9. Scaffolding pipe according to any one of claims 6 to 8, **characterised in that** the receiving portion (16) has a groove (28) which is interrupted or continuous in a peripheral direction, this groove (28) having a larger axial spacing (x_{N}) with respect to the first axial pipe end (12) than the positioning groove (26) and defining an inner diameter (d_{1,i,N}) to which the following applies: d_{1,i,min} < d_{1,i,N} < d_{1,i}.

10. Scaffolding pipe according to claim 9, **characterised in that** the insertion portion (18) from the second axial pipe end (14) to the radial shoulder (22) has an axial insertion length (L_{E}), the following applying to an axial spacing (x_{N}) of the groove (28) with respect to the first axial pipe end (12): 0.5*L_{E} < x_{N} < L_{E}, in particular xₙ ≈ 0.8*L_{E}.

11. Scaffolding pipe according to any one of the preceding claims, **characterised in that** the scaffolding pipe (10) has between the receiving portion (16) and the insertion portion (18) an intermediate region (20) in which the scaffolding pipe (10) preferably has the same outer diameter (d_{1,a}) as in the receiving portion (16).

12. Scaffolding pipe according to claim 11, **characterised in that** the intermediate region (20) has adjacent to the radial shoulder (22) an expansion portion (40), in which the scaffolding pipe (10) expands radially towards the radial shoulder (22).

13. Scaffolding pipe according to any one of the preceding claims, **characterised in that** the annular support face (24) has an outer diameter (d_{3,a}) which is greater than the outer diameter (d_{1,a}) of the receiving portion (16)

14. Scaffolding pipe according to any one of the preceding claims, **characterised in that** the insertion portion (18) adjacent to the radial shoulder (22) has a contraction (38) which extends in the peripheral direction so that the annular support face (24) has an inner diameter (d_{3,i}) which is smaller than the outer diameter (d_{2,a}) of the insertion portion (18).

15. Scaffolding pipe according to any one of the preceding claims, **characterised in that** the insertion portion (18) tapers towards the second axial pipe end (14) and forms a tapered introduction portion (30).

16. Scaffolding pipe according to any one of the preceding claims, **characterised in that** the scaffolding pipe (10) is part of an operational scaffolding system and the wall thickness (s) of the scaffolding pipe (10) is a maximum of 3.2 mm, in particular approximately 2.7 mm, or is part of a load-bearing scaffolding system and the wall thickness (s) of the scaffolding pipe (10) is from 2.7 mm to 3.2 mm.

17. Scaffolding element having at least one scaffolding pipe (10) according to any one of the preceding claims and a transverse carrier (42) which is securely fitted to the scaffolding pipe (10), the transverse carrier (42) preferably being arranged perpendicularly relative to the scaffolding pipe (10) on the receiving portion (16) or on an intermediate region (20) of the scaffolding pipe (10).

18. Scaffolding element according to claim 17, **characterised in that** there are provided two scaffolding pipes (10) according to any one of claims 1 to 16 which are connected to each other by means of the at least one transverse carrier (42) in order to form a frame element of the structural scaffolding system.

## Revendications

1. Tube d'échafaudage pour un échafaudage, comprenant un axe de tube (A) qui s'étend depuis une première extrémité de tube axiale (12) jusqu'à une deuxième extrémité de tube axiale opposée (14),
une portion de réception (16) prévue au niveau de la première extrémité de tube axiale (12) et
une portion d'enfichage (18) prévue au niveau de la deuxième extrémité de tube axiale (14), qui présente une section transversale réduite par rapport à la section de réception (16) et qui se termine par un épaulement radial (22) qui forme une surface d'appui annulaire (24) orientée vers la portion d'enfichage (18),
le diamètre intérieur (d_{1,i}) de la portion de réception (16) étant supérieur au diamètre extérieur (d_{2,a}) de la portion d'enfichage (18), de telle sorte qu'un tube d'échafaudage adjacent (10) ayant une portion d'enfichage (18) identique puisse être enfiché dans la portion de réception (16),
une paroi tubulaire (34) du tube d'échafaudage (10) présentant au niveau de la première extrémité de tube axiale (12) une épaisseur de paroi maximale (sₘₐₓ et dans la partie restante une épaisseur de paroi réduite (s), **caractérisé en ce que** le tube d'échafaudage est fabriqué d'une seule pièce.

2. Tube d'échafaudage selon la revendication 1, **caractérisé en ce que** pour l'épaisseur de paroi maximale (sₘₐₓ) au niveau de la première extrémité de tube axiale (12), on a : 1,2*s ≤ sₘₐₓ ≤ 2*s , en particulier sₘₐₓ ≈ 1,5*s.

3. Tube d'échafaudage selon la revendication 1 ou 2, **caractérisé en ce qu'**un diamètre extérieur (d_{1,a}) du tube d'échafaudage (10) au niveau de la première extrémité de tube axiale (12) correspond essentiellement à un diamètre extérieur (d_{1,a}) de la portion de réception (16).

4. Tube d'échafaudage selon l'une quelconque des revendications précédentes, **caractérisé en ce que** le tube d'échafaudage (10) présente, au niveau de la première extrémité de tube axiale (12), une portion d'épaississement (36) dans laquelle la paroi tubulaire (34) s'épaissit essentiellement en forme de cale depuis la plus faible épaisseur de paroi (s) jusqu'à l'épaisseur de paroi maximale (Sₘₐₓ₎.

5. Tube d'échafaudage selon la revendication 4, **caractérisé en ce que** la portion d'épaississement (36) présente une dimension axiale (L_{A}), où : s < L_{A} < 5*s, en particulier L_{A} ≈ 2,5*s.

6. Tube d'échafaudage selon l'une quelconque des revendications précédentes, **caractérisé en ce que** la portion de réception (16) présente au niveau de la première extrémité de tube axiale (12) exactement une rainure de positionnement périphérique ou interrompue dans la direction périphérique (26), qui réduit le diamètre intérieur (d_{1,i}) de la portion de réception (16) et qui définit le diamètre intérieur minimal (d_{1,i, min}) de la portion de réception (16).

7. Tube d'échafaudage selon la revendication 6, **caractérisé en ce que** la portion d'enfichage (18) présente, de la deuxième extrémité de tube axiale (14) jusqu'à l'épaulement radial (22), une longueur d'enfichage axiale (L_{E}), une distance axiale (x_{P}) de la rainure de positionnement (26) à la première extrémité de tube axiale (12) étant inférieure à un tiers, en particulier étant inférieure à un cinquième, de la longueur d'enfichage axiale (L_{E}).

8. Tube d'échafaudage selon la revendication 6 ou 7, **caractérisé en ce qu'**une distance axiale (x_{P}) de la rainure de positionnement (26) à la première extrémité de tube axiale (12) est inférieure au diamètre intérieur (d_{1,i}) de la portion de réception (16).

9. Tube d'échafaudage selon l'une quelconque des revendications 6 à 8, **caractérisé en ce que** la portion de réception (16) présente une rainure (28) périphérique ou interrompue dans la direction périphérique, cette rainure (28) présentant une plus grande distance axiale (x_{N}) à la première extrémité de tube axiale (12) que la rainure de positionnement (26) et définissant un diamètre intérieur (d_{1,i,N}) pour lequel on a : d_{1,i,min} < d_{1,i,N} < d_{1,i}.

10. Tube d'échafaudage selon la revendication 9, **caractérisé en ce que** la portion d'enfichage (18) de la deuxième extrémité de tube axiale (14) jusqu'à l'épaulement radial (22) présente une longueur d'enfichage axiale (L_{E}), où, pour une distance axiale (x_{N}) de la rainure (28) à la première extrémité de tube axiale (12), on a : 0,5*LE < X_{N} < L_{E}, en particulier x_{N} ≈ 0,8*L_{E}.

11. Tube d'échafaudage selon l'une quelconque des revendications précédentes, **caractérisé en ce que** le tube d'échafaudage (10) présente, entre la portion de réception (16) et la portion d'enfichage (18), une région intermédiaire (20) dans laquelle le tube d'échafaudage (10) présente de préférence le même diamètre extérieur (d_{1,a}) que dans la portion de réception (16).

12. Tube d'échafaudage selon la revendication 11, **caractérisé en ce que** la région intermédiaire (20) présente, en position adjacente à l'épaulement radial (22), une portion d'élargissement (40) dans laquelle le tube d'échafaudage (10) s'élargit radialement jusqu'à l'épaulement radial (22).

13. Tube d'échafaudage selon l'une quelconque des revendications précédentes, **caractérisé en ce que** la surface d'appui annulaire (24) présente un diamètre extérieur (d_{3,a}) qui est supérieur au diamètre extérieur (d_{1,a}) de la portion de réception (16).

14. Tube d'échafaudage selon l'une quelconque des revendications précédentes, **caractérisé en ce que** la portion d'enfichage (18) présente, en position adjacente à l'épaulement radial (22), un insert périphérique (38) dans la direction périphérique, de telle sorte que la surface d'appui annulaire (24) présente un diamètre intérieur (d_{3,i}) qui est inférieur au diamètre extérieur (d_{2,a}) de la portion d'enfichage (18).

15. Tube d'échafaudage selon l'une quelconque des revendications précédentes, **caractérisé en ce que** la portion d'enfichage (18) se rétrécit vers la deuxième extrémité de tube axiale (14) et forme un cône d'insertion (30).

16. Tube d'échafaudage selon l'une quelconque des revendications précédentes, **caractérisé en ce que** le tube d'échafaudage (10) fait partie d'un échafaudage de travail et l'épaisseur de paroi (s) du tube d'échafaudage (10) vaut au maximum 3,2 mm, en particulier environ 2,7 mm, ou fait partie d'un échafaudage de support et l'épaisseur de paroi (s) du tube d'échafaudage (10) vaut 2,7 mm à 3,2 mm.

17. Élément d'échafaudage comprenant au moins un tube d'échafaudage (10) selon l'une quelconque des revendications précédentes et une traverse (42) montée fixement sur le tube d'échafaudage (10), la traverse (42) étant de préférence disposée perpendiculairement au tube d'échafaudage (10) au niveau de la portion de réception (16) ou au niveau d'une région intermédiaire (20) du tube d'échafaudage (10).

18. Élément d'échafaudage selon la revendication 17, **caractérisé en ce que** deux tubes d'échafaudage (10) selon l'une quelconque des revendications 1 à 16 sont prévus, lesquels sont raccordés l'un à l'autre par le biais de l'au moins une traverse (42) afin de former un élément de cadre de l'échafaudage.
